# EUROPÄISCHE PATENTSCHRIFT

(11) **EP 1 011 001 B1**
(45) Veröffentlichungstag und Bekanntmachung des Hinweises auf die Patenterteilung: **07.06.2006**
(21) Anmeldenummer: 98403233.4
(22) Anmeldetag: 18.12.1998
(51) Int. Cl.: G02B 6/50, G02B 6/44

(54) **Vorrichtung zum Einführen und/oder Herausführen eines Kabels in eine bzw. aus einer rohrförmigen Leitung**
Device for introducing and of extracting a cabel in or out of a tubelike conductor
Dispositif pour insertion et ou extraction d'un cable rentrant ou sortant d'un conducteur tubulaire

(43) Veröffentlichungstag der Anmeldung: 21.06.2000
(73) Patentinhaber: Draka Comteq B.V., 1021 JZ Amsterdam (NL)
(72) Erfinder: Gregor, Paul, 46145 Oberhausen (DE); Kuhn, Lothar, 47249 Duisburg (DE)
(74) Vertreter: Dohmen, Johannes Maria Gerardus

(56) Entgegenhaltungen:
- EP-A- 0 294 243
- DE-A- 3 001 226
- DE-A- 3 140 928
- DE-C- 19 607 267
- DE-U- 1 810 367
- GB-A- 2 257 229

## Beschreibung

Die Erfindung betrifft eine Vorrichtung zum Einführen und/oder Herausführen eines Kabels, insbesondere eines optischen Nachrichtenkabels, in eine bzw. aus einer rohrförmigen Leitung.

Im Zuge der Errichtung neuer Kabelanlagen für die Telekommunikation durch regionale und kommunale Untemehmen wird in zunehmendem Maße aus wirtschaftlichen und/oder organisatorischen Gründen über Alternativlösungen zur herkömmlichen Verlegung von Telekommunikationskabeln unmittelbar im Erdreich nachgedacht. Eine sich insbesondere aus wirtschaftlichen Gründen anbietende alternative Verlegetechnik für Telekommunikationskabel ist die Nutzung von im Rohr- bzw. Kanalnetz eines Versorgungssystems einer Stadt oder einer Ortschaft vorhandenen Gas- und Wasserleitungen. Eine solche Lösung ist in der DE 30 01 226 A1 beschrieben. Neben der Reduzierung der Kosten zum Aufbau eines städtischen oder regionalen Telekommunikationsnetzes sind durch die Nutzung der vorhandenen Leitungen nur in geringem Umfang Erdarbeiten erforderlich, so daß der insbesondere in Städten oft enge Verkehrsraum wenig beeinträchtigt wird. Zudem stellt bei dieser neuen Verlegetechnik die in vielen Fällen bereits dichte Trassenbelegung mit Leitungen aller Ver- und Entsorgungssparten kein wesentliches Problem dar, sondern kann sogar von Vorteil sein.

Zum Aufbau eines Telekommunikationsnetzes unter Verwendung von einen vergleichsweise kleinen Außendurchmesser aufweisenden optischen Kabeln einschließlich der Anbindungsmöglichkeit für später zuzuschaltende Teilnehmer bietet sich daher aus technischen und organisatorischen Gründen sowie aus Gründen des Wegerechts die Verlegung von optischen Nachrichtenkabeln z. B. in Frischwasserleitungen des vorhandenen Versorgungsnetzes an. Dabei ist größter Wert auf die Trinkwasser-Neutralität des Kabelmaterials, insbesondere des Kabelmantels, sowie auf die Längswasserdichtheit und eine dauerhaft sichere Permeationssperre des Kabels gegenüber Wasserdampf zu legen. Darüber hinaus ist beim Einführen des Kabels in die Leitung durch besondere Sorgfalt dafür zu sorgen, daß in der Leitung keine Verkeimung oder anderen mikrobiologischen Verunreinigungen auftreten.

Eine zusätzliche Schwierigkeit bei der Verlegung von Kabeln in Trinkwasserleitungen besteht darin, daß in Trinkwasserleitungen in Abständen von etwa 150 bis 250 m Schieber oder andere Absperrvorrichtungen zum Absperren der Frischwasserleitung angeordnet sind. An diesen Absperrstellen muß das Kabel ohne irgendwelche Beeinträchtigungen mechanischer oder optischer Art um den Schieber herumgeführt werden, indem das Kabel vor dem Schieber aus der rohrförmigen Leitung herausgeführt und hinter dem Schieber wieder in die rohrförmige Leitung eingeführt wird. Zudem ist es auch für die Erstellung von Teilnehmeranschlüssen oder Abzweigen erforderlich, ein optisches Kabel aus der rohrförmigen Leitung heraus oder in die rohrförmige Leitung hinein zu führen.

Die DE 18 10 367 U zeigt eine Vorrichtung zum Einführen und/oder Herausführen eines Kabels, insbesondere eines optischen Nachrichtenkabels, in eine bzw. aus einer rohrförmigen Leitung, bestehend aus einem an einer rohrförmigen Leitung zubefestigtes flanschartiges Gehäuse, zumindest einem in dem Gehäuse angeordnetes und in die Leitung ragendes, bogenförmig ausgebildetes Führungsrohr zum Hindurchführen des Kabels durch eine durch die Wandung der Leitung hindurchgehende Durchgangsbohrung und einer Mehrzahl von das hindurchgeführte Kabel dicht umschließenden, ringförmigen Dichtelementen, wobei das Gehäuse ein an der rohrförmigen Leitung befestigtes Unterteil und ein an dem Unterteil befestigtes, die Dichtelemente umschließendes flanschartiges Oberteil aufweist.

Die DE 196 07 267 zeigt eine Vorrichtung zum Einführen und/oder Herausführen eines Kabels oder Schlauches in Ver- und Entsorgungsleitungen, insbesondere in Hochdruck-Gasrohrleitungen, in der ein im Bereich einer Durchgangsbohrung in der Wandung einer rohrförmigen Leitung an der rohrförmigen Leitung befestigtes Gehäuse angeordnet ist, zusammen mit zwei flanschartigen Hosenrohren, die spiegelbildlich zur Richtung der rohrförmigen Leitung zum Einführen eines Kabels in beide Richtungen der rohrförmigen Leitung angebracht sind.

Die Erfindung betrifft eine Vorrichtung gemäß Oberbegriff von Anspruch 1.

Die mit der Vorrichtung gemäß Oberbegriff von Anspruch 1 erzielbaren Vorteile bestehen insbesondere dann, daß auch bei hohen Drücken innerhalb der rohrförmigen Leitung ein dichtes Ein- und Herausführen des Kabels in die bzw. aus der Leitung gewährleistet ist. Dadurch wird nicht nur das Austreten eines in der Leitung transportierten Mediums an den Stellen des Einführens und Herausführens des Kabels vermieden, sondern es wird zudem der Eintritt von Verunreinigungen in das Innere der rohrförmigen Leitung zuverlässig verhindert. Dies ist insbesondere bei der Verwendung von Frischwasserleitungen zur Verlegung von Kabeln von großer Bedeutung. Das in die Leitung ragende, bogenförmig ausgebildete Führungsrohr erlaubt ein einfaches und sicheres Ein- und Ausführen des Kabels in die bzw. aus der rohrförmigen Leitung sowie ein einfaches und sicheres Ablegen des Kabels am Boden der Leitung bzw. Aufnehmen des Kabels vom Boden der Leitung, ohne daß die Gefahr einer Beschädigung des Kabels, beispielsweise eines empfindliche optische Fasern aufweisenden Nachrichtenkabels, besteht. Die Vorrichtung ist zudem einfach und kostengünstig herstellbar und an der Leitung montierbar, so daß sich auch bei einer großen Anzahl von erforderlichen Abzweigen und Teilnehmeranschlüssen sowie in der rohrförmigen Leitung angeordneten Absperrvorrichtungen für die Installation des Kabels im Vergleich zur Verlegung des Kabels unmittelbar im Erdreich relativ geringe Installations- und Tiefbaukosten ergeben. Ein System mit den Vorrichtungen zum Einführen und/oder Herausführen von Kabeln eignet sich insbesondere zur Verlegung von optischen Kabeln in Ver- oder Entsorgungsleitungen eines städtischen oder regionalen Versorgungsnetzes zum Aufbau eines städtischen oder regionalen Telekommunikationsnetzes.

Um das Verlegen des Kabels in der rohrförmigen Leitung zu vereinfachen und zum Einziehen des Kabels die Versorgung bzw. Entsorgung durch die rohrförmige Leitung nur über einen möglichst kurzen Zeitraum unterbrechen zu müssen, ist es vorteilhaft, wenn das Gehäuse ein an der rohrförmigen Leitung befestigtes Unterteil und ein an dem Unterteil befestigtes, die ringförmigen Dichtelemente umschließendes flanschartiges Oberteil aufweist. Durch diesen zweigeteilten Aufbau des Gehäuses ist es möglich, zum Herstellen einer erfindungsgemäßen Vorrichtung zunächst das sattelartige, auch als Sattelstück oder Anbohrstück bezeichnete Unterteil beispielsweise mittels Haltebügeln an der rohrförmigen Leitung zu befestigen, dann die Leitung anzubohren und anschließend die durch die Wandung der Leitung hindurchgehende Durchgangsbohrung bis zum Einziehen des Kabels in die Leitung mit einem Blindflansch abzudichten.

Der Erfindung liegt das Problem zugrunde eine Vorrichtung zu schaffen, die Verlegung von Kabeln in Trinkwasserleitungen ermöglicht, ohne daß die Gefahr einer Infektion des Trinkwassers von Bakterienvermehrung besteht.

Dieses Problem wird gemäß Anspruch 1 gelöst, indem das Führungsrohr im Bereich des Endes (51), welches entgegengestst zum in die Leitung (3) ragenden Ende (55) liegt, wenigstens eine durch seine Wandung hindurchgehende Öffung zum Entlüften des Führungsrohres aufweist.

Auf diese Weise kann sich in dem Führungsrohr befindende Luft aus dem Führungsrohr entweichen. Die Bildung von Luftpolstem im oberen, in das Gehäuse ragenden Ende des Führungsrohres, die die Bakterienvermehrung begünstigt, wird sicher verhindert.

Durch die in den abhängigen Ansprüchen aufgeführten Merkmale sind vorteilhafte Weiterbildungen und Verbesserungen der Erfindung möglich.

Um eine Verkeimung oder Verunreinigung des in der rohrförmigen Leitung transportierten Mediums sicher zu vermeiden, ist es von Vorteil, wenn das Führungsrohr aus einem Edelstahl oder aus einem Kunststoff ausgebildet ist.

Besonders vorteilhaft ist es, wenn in dem Gehäuse zwei bogenförmig in die rohrförmige Leitung ragende Führungsrohre angeordnet sind. Auf diese Weise ist es mit einer einzigen erfindungsgemäßen Vorrichtung möglich, einen Kabelabzweig herzustellen oder eine in der rohrförmigen Leitung angeordnete Absperrvorrichtung zu umgehen, indem das Kabel durch eines der beiden bogenförmig ausgebildeten Führungsrohre aus der Leitung herausgeführt wird und dieses Kabel bzw. ein anderes Kabel durch das andere bogenförmig ausgebildete Führungsrohr wieder in die Leitung eingeführt wird.

Für ein einfaches Einführen bzw. Herausführen des Kabels ist es dabei von Vorteil, wenn die zwei bogenförmig ausgebildeten Führungsrohre in einander entgegengesetzter Richtung in die Leitung ragen und wenn die zwei Führungsrohre in Form eines X angeordnet sind.

Aus strömungstechnischen Gründen ist es vorteilhaft, wenn das Führungsrohr an seinem in die Leitung ragenden Ende einen sich in Strömungsrichtung erweiternden, als Abrißkante wirkenden Abschnitt aufweist.

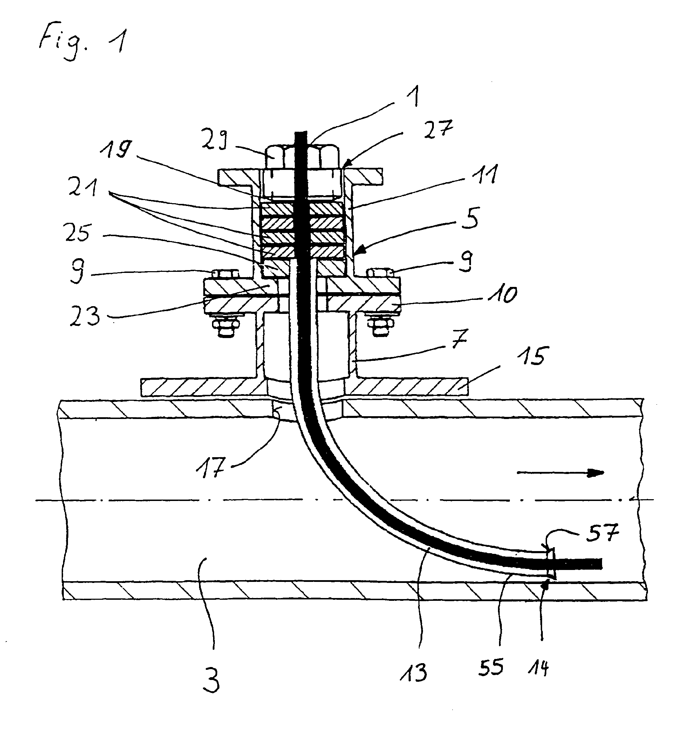

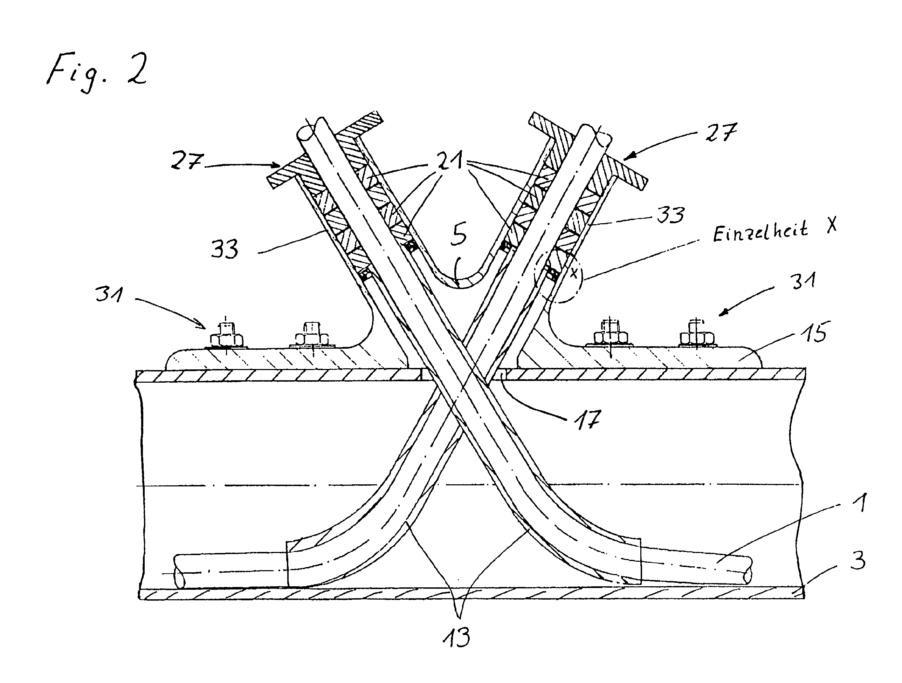

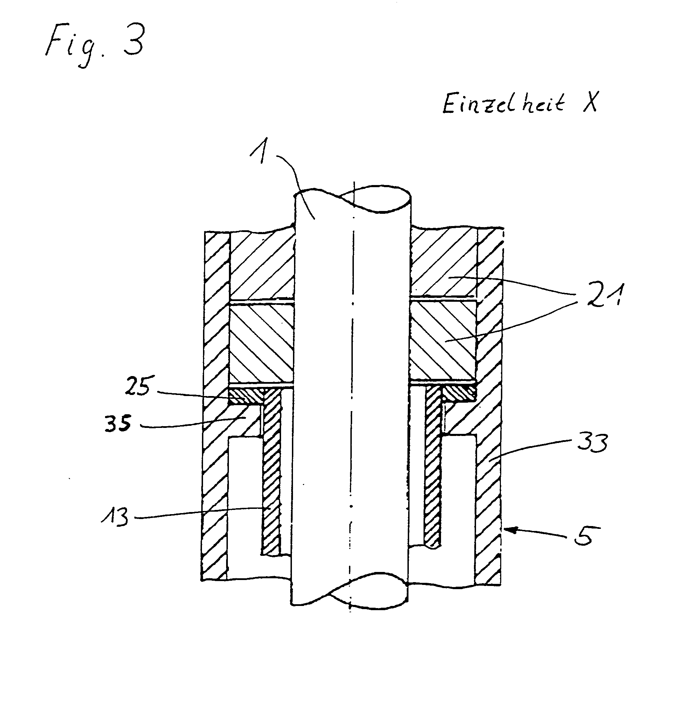

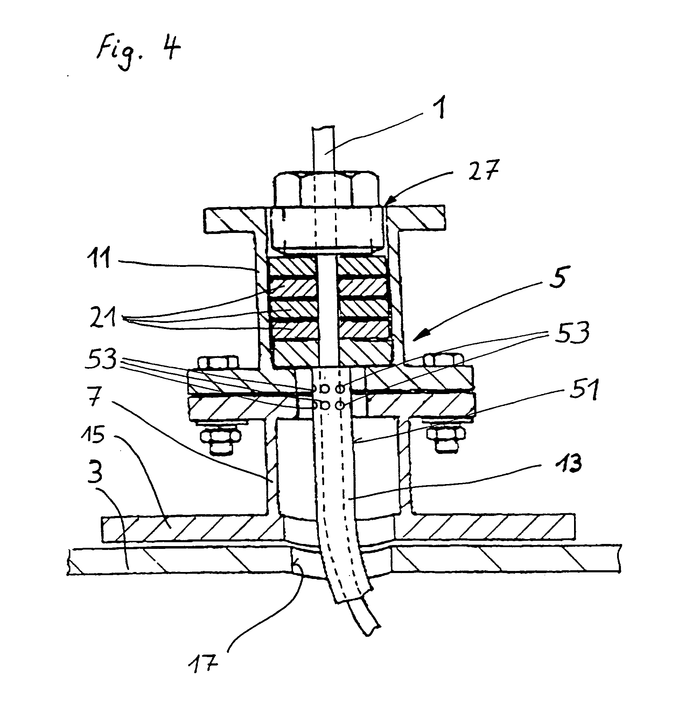

Ausführungsbeispiele sind in der Zeichnung vereinfacht dargestellt und in der nachfolgenden Beschreibung näher erläutert. Es zeigen Fig. 1 ein erstes Ausführungsbeispiel einer Vorrichtung nach dem Stand der Technik Fig. 2 ein zweites Ausführungsbeispiel einer Vorrichtung nach dem Stand der Technik Fig. 3 eine Ansicht der Einzelheit X in Fig. 2 sowie Fig. 4 eines Ausführungsbeispiel einer erfindungsgemäßen Vorrichtung.

Die in der Fig. 1 beispielhaft dargestellte Vorrichtung zum Einführen und/oder Herausführen eines Kabels 1, beispielsweise eines optischen Nachrichtenkabels, in eine bzw. aus einer rohrförmigen Leitung 3, bei der es sich z. B. um eine im Erdreich verlegte Frischwasserleitung handelt, hat ein Gehäuse 5. Das Gehäuse 5 ist beispielweise mit einem sattelartig ausgebildeten Fußteil 15 seines rohrförmigen Unterteils 7, das üblicherweise auch als Sattelstück oder Anbohrstück bezeichnet wird, dicht auf die rohrförmige Leitung 3 aufgesetzt und mittels bekannter, in der Fig. 1 nicht dargestellter Haltebügel an der rohrförmigen Leitung 3 befestigt. Das Gehäuse 5 weist neben dem Unterteil 7, mit dem es an der rohrförmigen Leitung 3 befestigt ist, ein beispielsweise mittels mehrerer Schrauben 9 an einem dem Fußteil 15 des Unterteils 7 abgewandt vorgesehenen Befestigungsflansch 10 des Unterteils 7 dicht befestigtes flanschartiges Oberteil 11 auf. Innerhalb des im Grunde rohrförmigen Gehäuses 5 ist ein bogenförmig ausgebildetes Führungsrohr 13 vorgesehen, das sich beispielsweise ausgehend von dem Oberteil 11 des Gehäuses 5 durch das Unterteil 7 mit seinem Fußteil 15 und durch eine in der Wandung der rohrförmigen Leitung 3 zuvor ausgebildete Durchgangsbohrung 17 hindurch bis in die rohrförmige Leitung 3 erstreckt. Dabei ist bei dem dargestellten Ausführungsbeispiel das bogenförmig ausgebildete Führungsrohr 13 an die Abmessungen der rohrförmigen Leitung 3 angepaßt und endet z. B. in etwa in Längsrichtung der Leitung 3 weisend nahe ihres Bodens. Dies hat den Vorteil, daß ein durch das Führungsrohr 13 in die Leitung 3 eingeführtes Kabel 1 ohne übermäßig hohe mechanische Beanspruchung auf einfache und sichere Weise in die Leitung 3 eingeführt und am Boden der Leitung 3 abgelegt werden kann bzw. ein Kabel ohne größere Schwierigkeiten vom Boden der Leitung 3 in das Führungsrohr 13 eingeführt und durch dieses aus der Leitung 3 herausgeführt werden kann. Um eine Verunreinigung der z. B. zum Transport von Trinkwasser verwendeten rohrförmigen Leitung 3 bzw. des in ihr transportierten Trinkwassers zu vermeiden, ist das Führungsrohr 13 beispielsweise aus Edelstahl ausgebildet. Es kann aber ebenfalls aus einem geeigneten Kunststoff hergestellt sein. Aus strömungstechnischen Gründen ist bei diesem Auführungsbeispiel an dem in die Leitung 3 ragenden Ende 55 des Führungsrohrs 13 ein sich in der durch einen Pfeil angedeuteten Strömungsrichtung des durch die Leitung 3 transportierten Mediums erweiternder, als Abrißkante wirkender Abschnitt 57 vorgesehen.

Um im Bereich der Kabeleinführung bzw. der Kabelherausführung den Austritt des in der rohrförmigen Leitung 3 transportierten Mediums, z. B. Frischwassers, aus der Leitung 3 bzw. aus dem Gehäuse 5 der Vorrichtung zu vermeiden, sind beispielsweise in dem eine gestufte Längsbohrung 19 aufweisenden rohrförmigen Oberteil 11 des Gehäuses 5 eine Mehrzahl von in Durchführungsrichtung des Kabels 1 übereinander angeordneter ringförmiger Dichtelemente 21 vorgesehen. Diese z. B. vier Dichtelemente 21 liegen in radialer Richtung sowohl an dem Umfang des Kabels 1 als auch an der Innenseite der Wandung des Oberteils 11 dicht an und verhindern auf diese Weise, daß zwischen dem Umfang des Kabels 1 und der Wandung des Oberteils 11 des Gehäuses 5 das in der Leitung 3 transportierte Medium nach außen dringen kann bzw. Verunreinigungen in das Innere des Gehäuses 5 gelangen können. Ersteres gilt selbst bei Drücken im Inneren der rohrförmigen Leitung 3 von 15 bar und mehr. An einem in radialer Richtung nach innen weisenden, an dem dem Unterteil 7 zugewandten Ende des Oberteils 11 ausgebildeten Halteabsatz 23 liegt zusätzlich ein ringförmiger Dichtring 25 an, der eine Abdichtung zwischen dem Umfang des Führungsrohres 13 und der Innenseite der Wandung des Oberteils 11 des Gehäuses 5 gewährleistet. Um die Dichtelemente 21 und den Dichtring 25 in ihrer Position zu halten und zudem ein sicheres und dichtes Anliegen der Dichtelemente 21 und des Dichtrings 25 aneinander sowie am Umfang des Kabels 1 bzw. des Führungsrohres 13 und der Wandung des Oberteils 11 sicherzustellen, ist an dem dem Unterteil 7 des Gehäuses 5 abgewandten Ende des Oberteils 11 eine Schraubverbindung 27 vorgesehen, die beispielsweise durch eine in die Längsbohrung 19 des Oberteils 11 eingeschraubte Abschlußschraube 29 oder eine entsprechende Überwurfmutter gebildet ist. Die ringförmigen Dichtelemente 21 sind im übrigen so bemessen, daß sich das Kabel 1 vor dem Anziehen der Abschlußschraube 29 bzw. einer Überwurfmutter gut durch die Vorrichtung hindurchführen läßt.

Die in den Fig. 2 und 3 beispielhaft dargestellte Vorrichtung zum Herausführen eines Kabel 1 aus einer rohrförmigen Leitung 3 und zum Einführen des Kabels 1 oder eines anderen Kabels in die rohrförmige Leitung 3 weist ein Gehäuse 5 auf, das beispielsweise mittels einer Verschraubung 31 an seinem sattelartigen Fußteil 15 fest und dicht mit der rohrförmigen Leitung 3 verbunden ist. An das Fußteil 15 des abgesehen von dem Fußteil z. B. etwa V-förmig ausgebildeten Gehäuses 5 schließen sich bei diesem Ausführungsbeispiel zwei rohrförmig ausgebildete, schräg geneigte Abschnitte 33 des Gehäuses 5 an. Eine solche die Einführung und Herausführung von Kabeln zusammenfassende Vorrichtung läßt sich z. B. zum Umgehen eines in der rohrförmigen Leitung 3 angeordneten Absperrelements oder zum Herstellen eines Teilnehmeranschlusses vorteilhaft einsetzen. Zu diesem Zweck weist die Vorrichtung zwei bogenförmig ausgebildete Führungsrohre 13 auf, die z. B. aus Edelstahl oder einem geeigneten Kunststoff hergestellt sind. Die beiden schräg gegeneinander geneigten, in Form eines X angeordneten Führungsrohre 13 erstrecken sich ausgehend von jeweils einem der das Ende des jeweiligen Führungsrohres 13 mit radialem Abstand umgebenden rohrförmigen Abschnitte 33 des Gehäuses 5 durch eine zuvor ausgebildete, durch die Wandung der rohrförmigen Leitung 3 hindurchgehende Durchgangsbohrung 17 hindurch in einander abgewandter Richtung bis an den Boden der rohrförmigen Leitung 3. Auf diese Weise lassen sich mittels einer einzigen Vorrichtung das Kabel 1 aus der Leitung 3 herausführen und das Kabel 1 oder ein anderes Kabel wieder in die rohrfömige Leitung 3 einführen. Während sich die dargestellte Vorrichtung insbesondere für die Herstellung von Teilnehmeranschlüssen eignet, ist es für die Umgehung von in der rohrförmigen Leitung angeordneten Absperrvorrichtungen besonders vorteilhaft, wenn die zwei bogenförmigen Führungsrohre 13 ähnlich wie bei dem in der Fig. 1 dargestellten Ausführungsbeispiel angeordnet sind, d. h. in etwa senkrecht zur Längsrichtung der rohrförmigen Leitung 3 durch die Wandung der Leitung hindurchgeführt sind, mit dem Unterschied, daß sie in einander entgegengesetzter Richtung in die rohrförmige Leitung 3 ragen.

Der rohrförmigen Leitung 3 abgewandt sind ähnlich wie bei dem in der Fig. 1 dargestellten ersten Ausführungsbeispiel in jedem der beiden rohrförmigen Abschnitte 33 des Gehäuses 5 z. B. jeweils vier in Durchführungsrichtung des Kabels übereinander angeordnete ringförmige Dichtelemente 21 vorgesehen, die an dem Umfang des Kabels 1 und der Innenseite der Wandung des Abschnitts 33 des Gehäuses 5 dicht anliegen. Der rohrförmigen Leitung 3 zugewandt ist in jedem rohrförmigen Abschnitt 33 ein in radialer Richtung nach innen weisender Halteabsatz 35 vorgesehen, an dem sich in axialer Richtung ein ringförmiger Dichtring 25 abstützt. Dieser Dichtring 25 liegt mit seiner dem Halteabsatz 35 abgewandten Stirnseite an einem der Dichtelemente 21 sowie in radialer Richtung an dem Umfang des jeweiligen Führungsrohres 13 sowie der Innenseite der Wandung des jeweiligen Abschnitts 33 des Gehäuses 5 dicht an. An ihrem dem Fußteil 15 abgewandten Ende sind die beiden Abschnitte 33 jeweils mit einer flanschförmigen Schraubverbindung 27 versehen, die die Dichtelemente 21 sowie den Dichtring 25 in Durchführungsrichtung des Kabels dicht aneinander drückt und in ihrer Position sichert und so eine zuverlässige Abdichtung zwischen Kabel 1 bzw. Führungsrohr 13 und der Wandung des Gehäuses 5 der Vorrichtung gewährleistet.

Das in der Fig. 4 dargestellte Ausführungsbeispiel der erfindungsgemäßen Vorrichtung unterscheidet sich von dem in der Fig. 1 dargestellten Ausführungsbeispiel im wesentlichen lediglich dadurch, daß das Führungsrohr 13 an seinem in das Gehäuse 5 ragenden Ende 51 eine Mehrzahl von durch seine Wandung hindurchgehenden Öffnungen 53 aufweist. Diese Öffnungen 53 ermöglichen, daß in dem Führungsrohr 13 befindliche Luft, die sich im oberen Bereich des Führungsrohrs 3 ansammelt, aus dem Führungsrohr 13 entweichen kann. Dies ist inbesondere bei der Verlegung von Kabeln in Trinkwasserleitungen von Vorteil, da andernfalls durch im oberen, in das Gehäuse 5 ragenden Ende 51 des Führungsrohrs 13 angesammelte, stehende Luft die Bakterienbildung begünstigt wird.

## Patentansprüche

1. Vorrichtung zum Einführen und/oder Herausführen eines Kabels (1), insbesondere eines optischen Nachrichtenkabels, in eine bzw. aus einer rohrformigen Leitung, bestehend aus einem an einer rohrförmigen Leitung (3) befestigte flanschartiges Gehäuse (5), zumindest eins in dem Gehäuse (5) angeordnetes und in die Leitung (3) ragendes bogenförmig ausgebildetes Führungsrohr (13) zum Hindurchführen des Kabels (1) durch eine durch die Wandung der Leitung (3) hindurchgehende Durchgangsbohrung (17) und einer Mehrzahl von das hindurchgeführte Kabel (1) dicht umschließenden, ringförmigen Dichtelementen (21), wobei das Gehäuse (5) ein an der rohrförmigen Leitung (3) befestigtes Unterteil (7) und ein an dem Unterteil (7) befestigtes, die Dichtelemente (21) umschließendes flanschartiges Oberteil (11) aufweist, **dadurch gekennzeichnet daß** das Führungsrohr (13) im Bereich des Endes (51), welches entgegengesetzt zum in die Leitung (3) vagenden Ende (55) liegt, wenigstens eine durch seine Wandung hindurchgehende Öffnung (53) zum Entlüften des Führungsrohrs (13) aufweist

2. Vorrichtung nach Anspruch 1, wobei das Führungsrohr (13) aus einem Edelstahl ausgebildet ist.

3. Vorrichtung nach Anspruch 1, wobei das Führungsrohr (13) aus einem Kunststoff ausgebidet ist.

4. Vorrichtung nach einem der Ansprüche 1 bis 3,
wobei in dem Gehäuse (5) zwei bogenförmig ausgebildete Führungsrohre (13) angeordnet sind.

5. Vorrichtung nach Anspruch 4, wobei zwei bogenförmig ausgebildete Führungsrohre (13) in einander entgegengesetzter Richtung in die Leitung (3) ragen.

6. Vorrichtung nach Anspruch 4 oder 5, wobei die zwei Führungsrohre (13) in Formes eines X angeordnet sind.

7. Vorrichtung nach einem der Ansprüche 1 bis 6, wobei auf die Dichtelemente (21) durch eine Schraubverbindung (27) eine in Durchführungsrichtung des Kabels (1) wirkende Kraft aufgebracht ist.

8. Vorrichtung nach einem der Ansprüche 1 bis 7, wobei das Führungsrohr (13) an seinem in die Leitung (3) ragenden Ende (55) einen sich in Strömungsrichtung erweiternden Abschnitt (57) aufweist.

## Claims

1. Apparatus for introducing and/or withdrawing a cable (1), especially an optical communications cable, into and/or out of a tubular conduit, consisting of a flange-type housing (5) fastened to a tubular conduit (3), at least one guide tube (13) of arcuate form - arranged in the housing (5) and projecting into the conduit (3) - for passing the cable (1) through a bore (17) going through the wall of the conduit (3), and a plurality of annular sealing elements (21) which tightly surround the cable (1) being passed through, the housing (5) comprising a lower part (7) fastened to the tubular conduit (3) and a flange-type upper part (11) fastened to the lower part (7) and surrounding the sealing elements (21), **characterised in that** the guide tube (13) has, in the region of its end (51) which is remote from the end (55) projecting into the conduit (3), at least one aperture (53) going through its wall for venting the guide tube (13).

2. Apparatus according to claim 1, wherein the guide tube (13) is made of a stainless steel.

3. Apparatus according to claim 1, wherein the guide tube (13) is made of a plastics material.

4. Apparatus according to one of claims 1 to 3, wherein two guide tubes (13) of arcuate form are arranged in the housing (5).

5. Apparatus according to claim 4, wherein two guide tubes (13) of arcuate form project into the conduit (3) in opposite directions to one another.

6. Apparatus according to claim 4 or 5, wherein the two guide tubes (13) are arranged in the shape of an X.

7. Apparatus according to one of claims 1 to 6, wherein a force acting in the direction in which the cable (1) is passed is applied to the sealing elements (21) by means of a screw connection (27).

8. Apparatus according to one of claims 1 to 7, wherein the guide tube (13) has, at its end (55) projecting into the conduit (3), a portion (57) that widens out in the flow direction.

## Revendications

1. Dispositif d'introduction et/ou d'extraction d'un câble (1), en particulier un câble optique de télécommunications, dans une conduite tubulaire ou hors de celle-ci, formé par un boîtier (5) en forme de collet, fixé à une conduite tubulaire (3), au moins un tube de guidage (13) courbe, qui est agencé dans le boîtier (5) et s'engage dans la conduite (3) et qui est destiné à faire passer le câble (1) à travers un trou débouchant (17) traversant la paroi de la conduite (3), et une pluralité d'éléments d'étanchéité (21) annulaires, enserrant de manière étanche le câble (1) les traversant, le boîtier (5) comportant une partie inférieure (7) fixée sur la conduite tubulaire (3) et une partie supérieure (11), fixée sur la partie inférieure (7) et enserrant en forme de collet les éléments d'étanchéité (21), **caractérisé en ce que** le tube de guidage (13), dans la zone de l'extrémité (51) opposée à l'extrémité (55) s'engageant dans la conduite (3), comporte au moins un orifice (53) traversant sa paroi et destiné à purger l'air contenu dans le tube de guidage (13).

2. Dispositif selon la revendication 1, dans lequel le tube de guidage (13) est réalisé en acier inoxydable.

3. Dispositif selon la revendication 1, dans lequel le tube de guidage (13) est réalisé en matière plastique.

4. Dispositif selon l'une quelconque des revendications 1 à 3, dans lequel deux tubes de guidage (13) courbes sont agencés dans le boîtier (5).

5. Dispositif selon la revendication 4, dans lequel deux tubes de guidage (13) courbes s'engagent dans la conduite (3) dans des directions opposées l'une à l'autre.

6. Dispositif selon la revendication 4 ou 5, dans lequel les deux tubes de guidage (13) sont agencés en forme de X.

7. Dispositif selon l'une quelconque des revendications 1 à 6, dans lequel une force exercée dans la direction de passage du câble (1) est appliquée sur les éléments d'étanchéité (21) par l'intermédiaire d'un assemblage vissé (27).

8. Dispositif selon l'une quelconque des revendications 1 à 7, dans lequel le tube de guidage (13), au niveau de son extrémité (55) s'engageant dans la conduite (3), comporte un tronçon (57) qui s'élargit dans la direction d'écoulement.
